# EUROPEAN PATENT APPLICATION

(11) **EP 1 671 780 A1**
(43) Date of publication of application: **21.06.2006**
(21) Application number: 05112081.4
(22) Date of filing: 13.12.2005
(51) Int. Cl.: B29D 30/24, B29D 30/32

(54) **Interlaced bead lock segments for tire building drum**

(30) Priority: 17.12.2004 US 14925
(71) Applicant: THE GOODYEAR TIRE & RUBBER COMPANY, Akron, Ohio 44316-0001 (US)
(72) Inventor: Conger, Kenneth Dean, Stow, OH Ohio 44224 (US); Phippen, Steven John, Napanee, Ontario K7R 2H4 (CA)
(74) Representative: Kutsch, Bernd

(57) **Abstract**

A method and an apparatus for locking a pneumatic tire carcass ply between a bead pocket (112) of an annular bead lock mechanism (102) and a bead ring (150) in a way that clamps all ply reinforcement cords between the bead pocket (112) and the bead with a uniform clamping pressure is disclosed. The bead lock mechanism (102) is expandable from a retracted radius (RR) to a larger expanded radius (RE) by simultaneous radial movement of a plurality of bead lock segments (110) each of which have circumferentially extending fingers (116, 118) that are axially staggered such that the fingers of circumferentially adjacent bead lock segments (110) are interlaced when the bead lock mechanism (102) is expanded to the expanded radius (RE).

## Description

### Technical field of the invention

The present invention relates to a bead lock mechanism and a pneumatic tire building drum with such a mechanism and, more particularly, to "bead lock" bead holding portions of pneumatic tire building drums.

### Background of the invention

The general process of pneumatic tire construction typically includes the following steps. Firstly, a tire carcass is wound on a tire building drum including right and left shoulder formers, and is formed into a cylindrical shape. The carcass typically has multiple layers including at least one reinforcing ply having parallel reinforcing ply cords imbedded therein. Then, beads (inextensible rings) are set in specified positions on (around) the tire carcass. In this state, right and left bead locking mechanisms provided in the respective right and left shoulder formers are expanded in a radial direction of the tire building drum, whereby the beads are locked in place relative to the tire carcass. Subsequently, while shaping air is supplied to inflate the tire carcass, the left and the right shoulder formers are moved closer to each other, narrowing the distance between the beads. In this way, the tire carcass is shaped into a toroidal form. Thereafter, opposite side portions of the tire carcass are turned up around the respective beads. Finally, a breaker and a tread are further applied onto an outer circumferential surface of the tire carcass, whereby a green tire is completely built.

It can be seen that the tire construction and shaping operations apply forces to the ply cords that can move them longitudinally. This movement can cause tire non-uniformity if individual ply cords move different amounts than other ply cords in the ply, or if the ply moves off-center relative to the beads.

US-B- 5,385,620 addresses the problem of a shifting carcass ply by disclosing a process and apparatus that includes placing the left and right shoulder formers into an idle movable state while radially expanding the bead locking mechanism.

US-B- 5,405,484 discloses a tire building drum that has a pair of drum sections axially movable along a center shaft which form an internal tire inflation chamber for inflating the carcass of a green tire when mounted between the drum sections. Each of the drum sections has a plurality of bead lock segments controlled by a plurality of straight links moved by an annular piston. The piston is mounted in an annular cylinder surrounded by an annular manifold ring, an annular sealing ring and an annular bladder ring. Preferably, thirty-six bead lock segments (29, see FIG-5) are provided at each drum assembly to provide an increased holding force for clamping carcass plies-against a pair of bead ring assemblies during inflation of the green tire. The bead lock segments also provide space for the passage of the air lines extending between the two drum sections.

US-B- 5,288,352 discloses a bead locking apparatus that includes bead support segments disposed in an annular arrangement, an elastic ring fitted in an annular recess formed in the outer periphery of the annular arrangement of segments, and a device for radially expanding the elastic ring independently of the segments. The bead is first primarily locked by the elastic ring and then secondarily locked by the support segments.

US-B 5,433,814 discloses a green tire building apparatus that includes a plurality of bead locking segments arranged in a circle concentric with the main body of the shaping drum of the apparatus. A resilient annular member is mounted in an annular groove in the outer periphery of the bead locking segments, and the bead locking segments and annular member are moved radially outward for pushing a layer of tire material on the shaping drum against a bead which is disposed thereon. A turn-up bladder is arranged over, but separate from , the resilient annular member. The radially inward view of the top of a bead locking segment has a parallelogram profile.

Prior art bead lock mechanisms, typified by the plurality of segments illustrated in US-B- 5,405,484, have gaps between the segments when the drum expands due to the difference between the collapsed and expanded diameters. Ply cords that are located in these gaps are not clamped between the bead lock and the bead and can move when pressure is applied to inflate the carcass before ply turn up is complete, as is the case with a shaped turn up, for example. This movement of un-locked ply cords will result in these ply cords having a longer cord length (bead to bead) than the ply cords that are clamped by the bead lock mechanism. Resulting tire non-uniformity includes "high spots" on the tire sidewall and/or radial runout of the outside diameter.

It is an aspect of the present invention to provide a bead lock mechanism that effectively eliminates the gaps between expanded bead lock segments such that uniform clamping pressure can be effected around the entire circumference of the expanded bead lock mechanism.

### Brief summary of the invention

The invention relates to a bead lock mechanism according to claim 1, a tire building drum according to claim 7, and a method for locking a pneumatic carcass ply according to claim 8.

Dependent claims cover preferred embodiments of the invention.

In one aspect of the invention, the bead lock mechanism has at least two first fingers and at least two second fingers on each one of the bead lock segments.

### Brief description of the drawings

Reference will be made in detail to preferred embodiments of the invention, examples of which are illustrated in the accompanying drawing figures.

Certain elements in selected ones of the drawings may be illustrated not-to-scale, for illustrative clarity.

Elements of the figures can be numbered such that similar (including identical) elements may be referred to with similar numbers in a single drawing. For example, each of a plurality of elements collectively referred to as 199 may be referred to individually as 199a, 199b, 199c, etc.
Figure 1 is a side cross-sectional view of a shoulder former portion of a tire building drum, the view being split to show a bead lock mechanism in a retracted condition in the top half of the view, and in an expanded condition in the bottom half of the view, according to the invention;
Figure 2 is an end cross-sectional view of a prior art bead lock mechanism, the view being split to show the bead lock mechanism in a retracted condition in the top half of the view, and in an expanded condition in the bottom half of the view, according to the prior art;
Figure 3A is a top view of portions of three segments of the prior art bead lock mechanism of Figure 2 in a retracted condition, according to the prior art;
Figure 3B is a top view of portions of three segments of the prior art bead lock mechanism of Figure 2 in an expanded condition, according to the prior art;
Figure 4 is a perspective view of a prior art shoulder former with the bead lock mechanism in an expanded condition, according to the prior art;
Figure 5A is a side view of a bead lock segment, according to the invention;
Figure 5B is an end cross-sectional view of the bead lock segment of Figure 5A with the cross-section taken along the line 5B-5B in Figure 5A, according to the invention;
Figure 5C is a top view of the bead lock segment of Figure 5A, according to the invention;
Figure 6A is a top view of portions of three segments of a bead lock mechanism in a retracted condition, according to the invention;
Figure 6B is a top view of portions of three segments of the bead lock mechanism of Figure 6A in an expanded condition, according to the invention; and
Figure 7 is a perspective view of a shoulder former with the bead lock mechanism in an expanded condition, according to the invention.

### Detailed description of the invention

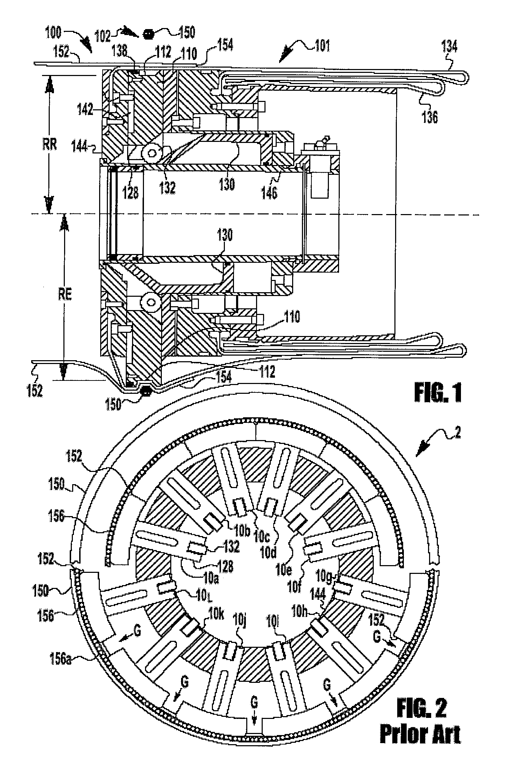

Figure 1 shows a cross-section of an embodiment of a shoulder former 101 of a tire building drum 100. The invention will be described in the context of this representative shoulder former 101, although it should be evident that the inventive concepts will have wide applicability to perhaps all types of pneumatic tire building machines that employ an expanding segmented ring for locking a tire bead in place on a tire carcass.

Referring first to the top half of Figure 1, the shoulder former 101 includes an annular body 144 extending radially from a central shaft 146. On the radial outside of the body 144 is a first circumferential shoulder forming bladder 134, which is shown in a deflated condition. The illustrated shoulder former 101 is oriented as a "right" shoulder former 101, and a representative carcass ply 152 extends rightward from a left shoulder former 101 (not shown) onto the right shoulder former 101, the ply 152 ending at a turnup end 154. In the process of building a tire carcass the carcass ply 152 (among other carcass components not shown) is positioned over the tire building drum 100 (including the shoulder formers 101) to become a cylindrical tube with an outside diameter that is slightly less than the inside diameter of an inextensible annular ringshaped tire bead 150, one of which is shown being held around the ply 152 near the ply turnup end 154. The carcass ply 152 and the bead 150 are axially positioned such that the bead is outward of a bead lock mechanism 102 of the shoulder former 101, and the turnup end 154 extends a predetermined length beyond the bead 150. The bead lock mechanism 102 is an expandable segmented ring comprised of a plurality of bead lock segments 110, each typically having a circumferentially extending bead pocket 112 formed in its radially outer surface.

An exemplary means for expanding and retracting the segments 110 is shown, and includes a radially extending shank 128 with a roller 132 on each segment 110, and a conical cam 130 which translates axial motion of the cam 130 into radial motion of the segments 110. The cam 130 continues to move axially, thereby radially extending each segment 110 until motion is halted by contact between the bead pocket 112 and carcass ply 152/bead150 composite. An annular elastic band 138 applies a retracting force on the segments 110 when the cam 130 moves out of the way. The top half of Figure 1 shows the segment 110 in a retracted condition (bottom of bead pocket 112 is at a retracted radius RR), while the bottom half of Figure 1 shows the segment 110 in an expanded condition (bottom of bead pocket 112 is at an expanded radius RE). When the bead lock mechanism 102 is in the expanded condition, the ply 152 has been pushed radially outward by the segments 110 until it is clamped between the bead pocket 112 and the bead 150, thereby "locking" the bead 150 in place relative to the carcass ply 152. In other words, the ply 152 is clamped between the radially outer surface (i.e., bead pocket 112) of the segments 110 and the radially inner surface of the bead 150. After the bead lock mechanism 102 has been expanded, the bladders 134, 136 and the portion of the carcass 152 between the shoulder formers 101 can be inflated while the shoulder formers 101 are brought together, thereby forming the carcass into a toroidal shape, turning up the ply turnup ends 154 and forming the sidewall/shoulders of a green tire. Particularly when the carcass 152 is blown up before the ply turnup ends 154 are turned up by the bladders 134, 136, it is important that ply reinforcement cords 156 (see Figure 2) be clamped between the segments 110 and the bead 150.

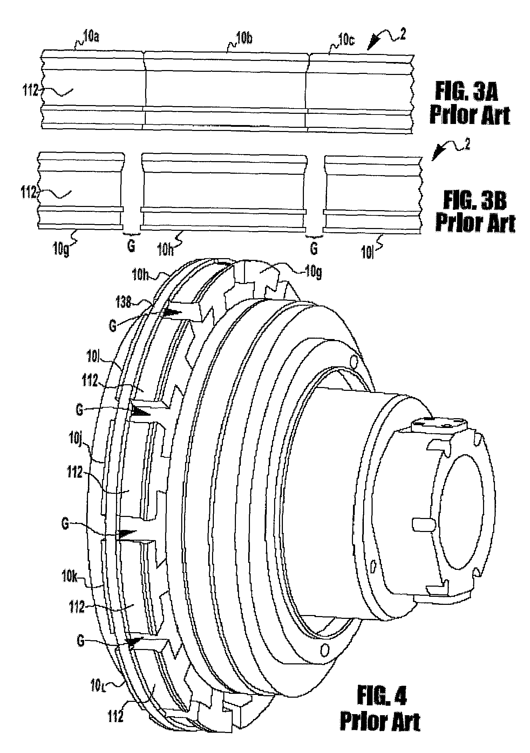

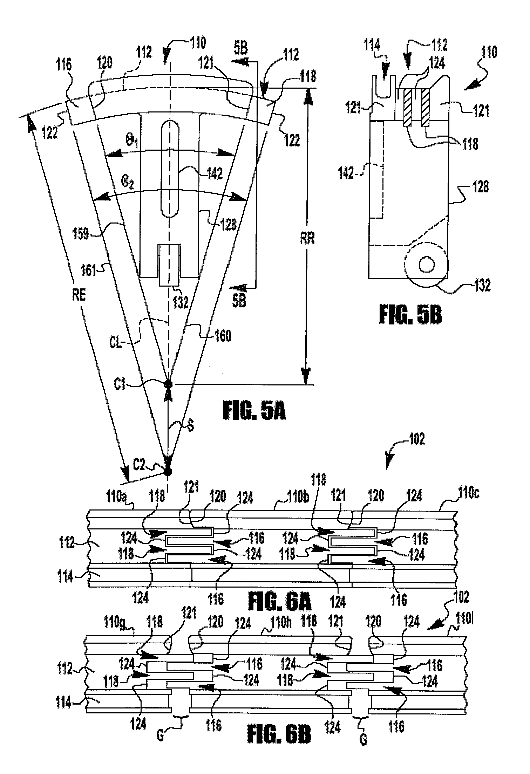

Figures 2, 3A, 3B and 4 (Figures 2-4) illustrate the operation of a prior art bead lock mechanism 2 having twelve conventionally shaped prior art segments 10a through 10_{L} (collectively referred to as prior art segments 10). Figure 3A and the top half of Figure 2 show the prior art segments 10a-10f in a retracted condition, while Figure 3B and the bottom half of Figure 2 show the prior art segments 10g-10_{L} in an expanded condition wherein the ply 152 has been pushed radially outward by the prior art segments 10g-10_{L} until it is clamped between the prior art segments 10g-10_{L} and the bead 150, thereby "locking" the bead 150 in place relative to the carcass ply 152. Figures 2-4 illustrate a problem with the prior art wherein some (e.g., cords 156a) of the ply reinforcement cords 156 are located in gaps G that occur between the prior art segments 10 when they expand from the retracted radius RR to the expanded radius RE having a larger circumference. Figure 4 is a perspective view of a shoulder former 101 with the prior art bead lock mechanism 2 wherein the prior art segments 10 are in an expanded condition that creates gaps G where ply reinforcement cords 156a may not be clamped.

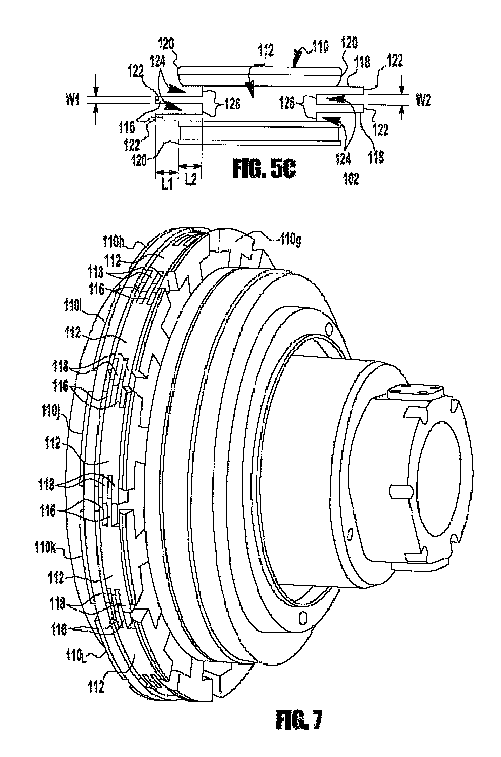

Figures 5A - 5C shows three views of a preferred embodiment of the present invention implemented in a segment 110 of a bead lock mechanism 102 for a shoulder former 101 portion of a tire building drum 100. The segment 110 still has the conventional roller 132, the conventional limit slot 142 on the shank 128, the conventional bead pocket 112 and a conventional band pocket 114 for the elastic band 138. One important feature of the invention is first fingers 116 and second fingers 118.

Two circumferentially extending first fingers 116 extend counterclockwise from a first segment edge 120, and two circumferentially extending second fingers 118 extend clockwise from a second segment edge 121. The first and second segment edges 120, 121 are conventionally located, i.e., separated by a segment edge angle θ1 that is equal in magnitude to 360° (degrees) divided by the number of segments 110 in the bead lock mechanism 102, or 30° for an exemplary twelve segment bead lock mechanism 102. The segment edge angle θ1 is measured from a first segment edge radial line 159 to a second segment edge radial line 160, both of which radiate from a first center-point C1 that is a distance RR (the retracted radius) from the bead pocket 112 on a radially extending centerline CL of the segment 110. It should be noted that the bead pocket 112 does not necessarily have a radius of curvature equal to the retracted radius RR, and in fact preferably has a radius of curvature equal to the expanded radius RE. Since the first and second fingers 116, 118 extend circumferentially beyond the first and second segment edges 120, 121; it follows that there must be corresponding finger recesses 124 to accommodate the first and second fingers 116, 118 when the segments 110 are in a retracted condition as shown in Figure 6A. Thus the first fingers 116 are axially staggered relative to the second fingers 118, such that a finger recess 124 is positioned circumferentially opposite to each of the first and second fingers 116, 118. Thus the second fingers 118 of a first segment (e.g., 110a) overlap, or are interlaced with, the first fingers 116 of a circumferentially adjacent second segment (e.g., 110b). In other words, the axially staggered first and second fingers 116, 118 are circumferentially extending fingers because they are distinguished from the rest of the segment 110 by adjacent finger recesses 124.

In order to fit into the finger recesses 124, each of the first and second fingers 116, 118 has a finger width W1 that is slightly less than a recess width W2. Similarly, a recess depth L2 is equal to or greater than a finger extension L1 of each of the first and second fingers 116, 118, where the finger extension L1 is measured from the first or second segment edge 120 or 121 to a corresponding finger end 122, and the recess depth L2 is measured from the first or second segment edge 120 or 121 to a corresponding recess base 126. For the sake of symmetry it is preferred that all of the finger extensions L1 are of the same magnitude and that all of the finger widths W1 are of the same magnitude, but that is not necessary for the practice of the invention. In fact, it is sufficient for any given finger recess 124 to be slightly larger in width W2 and depth L2 when compared to the finger width W1 and finger extension L1 of the circumferentially opposed first or second finger 116 or 118. Furthermore, it is not necessary that the first and second segment edges 120, 121 be symmetrically arranged about a radially extending centerline CL of the segment 110.

As shown in Figures 6B and 7, when the inventive bead lock mechanism 102 with the inventive segments 110 is in an expanded condition, i.e., the bead pocket 112 is at the expanded radius RE, the second fingers 118 of a first segment (e.g., 110a) still at least partly overlap (are interlaced with) the first fingers 116 of an adjacent second segment (e.g., 110b). Thus the inventive segments 110 have first and second fingers 116, 118 that span the gap G that is formed between the first and second segment edges 120, 121 when the segments 110 expand from the retracted radius RR to the expanded radius RE having a larger circumference. In other words, the radially outer, bead contacting, surface of the segments 110 (the bead pocket 112) is circumferentially extended by the first and second fingers 116, 118, thereby providing a circumferentially continuous bead pocket 112 that will effect uniform clamping pressure around the entire circumference of the expanded bead lock mechanism 102.

To insure that the first fingers 116 overlap the second fingers 118 when the bead lock mechanism is in the expanded condition, the finger ends 122 are separated by a finger end angle θ2 that has a magnitude of slightly more than the segment edge angle θ1; and the bead pocket 112 (extended by the first and second fingers 116, 118) has a radius of curvature RE that is equal in magnitude to the expanded radius RE of the bead lock mechanism 102. For the exemplary twelve segment bead lock mechanism 102, the finger end angle θ2 has a magnitude of 31.6° compared to 30° for the segment edge angle θ1, thereby creating a 0.8 degree overlap of the first and second fingers 116, 118. This small amount of overlap is sufficient to insure that there will not be any gap G between segments 110 when the bead lock apparatus 102 is in an expanded condition, even if it should expand to slightly more than the expanded radius RE. The magnitude of the expanded radius RE approximately matches the radius inside the bead 150, minus the thickness of any layers intervening between the bead 150 and the bead pocket 112 (e.g., the first shoulder bladder 134 and the carcass ply 152).

The finger end angle θ2 is measured from a first finger end line 161 for the finger end 122 of the first finger 116 to a second finger end line 162 for the finger end 122 of the second finger 118; wherein both the first and second finger end lines 161, 162 radiate from a second center-point C2 on the segment centerline CL that is a distance RE (the expanded radius RE) from the bead pocket 112. In other words, the second center-point C2 is the center of curvature for the bead pocket 112. Thus the second center-point C2 is a distance S from the first center-point C1, wherein the distance S has a magnitude equal to the difference between the magnitude of the expanded radius RE and the magnitude of the retracted radius RR. Thus a total angular extent of the bead pocket 112 is determined by the first and second fingers 116, 118 that extend circumferentially from the segment 110, and the bead pocket angular extent is equal to the finger end angle θ2.

In summary, the inventive bead lock mechanism 102 with the inventive bead lock segments 110 that have one or more first fingers 116 axially staggered with one or more second fingers 118 in the bead pocket 112 is able to clamp all of the ply reinforcement cords 156 between the bead pocket 112 and the bead 150 with a uniform clamping pressure on every ply reinforcement cord 156.

## Claims

1. A bead lock mechanism having a plurality of circumferentially arranged bead lock segments (110), wherein the bead lock mechanism (102) is expandable from a retracted radius (RR) to a larger expanded radius (RE) by simultaneous radial movement of the plurality of bead lock segments (110) for the purpose of locking a carcass ply (152) between a radially outer bead pocket (112) of the bead lock segment (110) and a bead ring (150) when the bead lock mechanism (102) is at the expanded radius (RE); the bead lock mechanism being **characterized by**:
a first finger (116) that circumferentially extends the bead pocket (112) counterclockwise from each one of the bead lock segments (110); and
a second finger(118) that circumferentially extends the bead pocket (112) clockwise from each one of the bead lock segments (110); wherein
the first finger (116) is axially staggered relative to the second finger (118).

2. The bead lock mechanism of claim 1, further **characterized by** at least two first fingers (116) and at least two second fingers (118).

3. The bead lock mechanism of claim 1 or 2, further **characterized by** a radius of curvature for the bead pocket (112) that is approximately equal in magnitude to the expanded radius (RE), and a bead pocket angular extent that is greater than 360 degrees divided by the quantity of bead lock segments (110) in the bead lock mechanism (102), wherein the bead pocket angular extent is the angle measured between a first radius line radiating from a center of curvature for the bead pocket (112) and passing through a finger end for the first finger (116), and a second radius line radiating from the center of curvature for the bead pocket (112) and passing through a finger end for the second finger (118).

4. The bead lock mechanism of at least one of the previous claims, wherein the bead lock mechanism is an annular bead lock mechanism (102) formed by the plurality of the circumferentially arranged bead lock segments (110).

5. The bead lock mechanism of at least one of the previous claims, further **characterized by**:
a radius of curvature for the bead pocket (112) that is approximately equal in magnitude to the expanded radius (RE);
a bead pocket angular extent for each one of the bead lock segments (110) that is greater than 360 degrees divided by the quantity of bead lock segments (110) in the bead lock mechanism (102), wherein:
the bead pocket angular extent is the angle measured between a first radius line radiating from a center of curvature for the bead pocket (11and passing through a finger end for the first finger on a typical one of the bead lock segments, and a second radius line radiating from a center of curvature for the bead pocket and passing through a finger end for the second finger on the typical one of the bead lock segments.

6. The bead lock mechanism of at least one of the previous claims, wherein the quantity of bead lock segments (110) is twelve and the bead pocket angular extent is about 31.6 degrees.

7. A tire building drum having a bead lock mechanism according to at least one of the previous claims.

8. A method for locking a pneumatic tire carcass ply between an annular bead lock mechanism (102) and a bead ring (150), wherein the bead lock mechanism is expandable from a retracted radius (RR) to a larger expanded radius (RE) by simultaneous radial movement of a plurality of bead lock segments (110) that have a radially outer bead pocket (112); the method comprising by the steps of:
providing a counterclockwise extending first finger (116) and an axially adjacent finger recess (124) on each one of the plurality of bead lock segments (110);
providing a clockwise extending second finger (118) and an axially adjacent finger recess on each one of the plurality of bead lock segments (110);
dimensioning and positioning the first fingers (116), the second fingers (118), and the finger recesses (124) such that when the bead lock mechanism (102) is expanded to the expanded radius (RE), the first finger (116) of each bead lock segment (110) is interlaced with the second finger (118) of a circumferentially adjacent bead lock segment (110), thereby providing a circumferentially continuous bead pocket (112).

9. The method of claim 8, further **characterized by** the step of:
shaping the bead pocket (112) such that it has a radius of curvature approximately equal to the expanded radius (RE).

10. The method of claim 8 or 9, further **characterized by** the step of:
dimensioning and positioning the first fingers, the second fingers, and the finger recesses such that when the bead lock mechanism is retracted to the retracted radius, the first finger of each bead lock segment is interlaced with the second finger of the circumferentially adjacent bead lock segment.
